# EUROPÄISCHE PATENTSCHRIFT

(11) **EP 0 636 349 B1**
(45) Veröffentlichungstag und Bekanntmachung des Hinweises auf die Patenterteilung: **04.11.1998**
(21) Anmeldenummer: 94202163.5
(22) Anmeldetag: 25.07.1994
(51) Int. Cl.: A61C 17/22, A46B 15/00

(54) **Zahnbürste**
Toothbrush
Brosse à dents

(30) Priorität: 30.07.1993 BE 9300812
(43) Veröffentlichungstag der Anmeldung: 01.02.1995
(73) Patentinhaber: Koninklijke Philips Electronics N.V., 5621 BA Eindhoven (NL)
(72) Erfinder: Müller, Ingo, NL-5656 AA Eindhoven (NL); Schneider, Norbert, NL-5656 AA Eindhoven (NL)
(74) Vertreter: Bos, Kornelis Sjoerd

(56) Entgegenhaltungen:
- CH-A- 459 144
- DE-U- 8 907 950
- FR-A- 2 471 757
- US-A- 2 877 477
- US-A- 4 476 604
- US-A- 4 680 825
- US-A- 5 105 499

## Beschreibung

Die Erfindung betrifft eine Zahnbürste mit zwei zueinander schwenkbaren Teilen, von denen ein erstes Teil als Griff dient und ein zweites Teil mit einem Bürstenkopf versehen ist, wobei zwischen den Teilen eine Feder vorhanden ist, deren eines Ende fest mit einem der Teile verbunden ist, wobei beim Gebrauch der Zahnbürste das zweite Teil in bezug auf das erste Teil gegen eine von der Feder ausgeübte Andruckkraft schwenkbar ist und die Feder beim Überschreiten einer bestimmten Schwelle für die Andruckkraft schnappt und bei schwächer gewordener Andruckkraft in ihre ursprüngliche Lage zurückkehrt.

Mit Schnappen ist eine plötzlich auftretende Beschleunigung oder Verzögerung gemeint.

Eine derartige Zahnbürste ist aus DE-A-37 24 476 bekannt.

Beim Putzen der Zähne spielt die Kraft, mit der die Bürste gegen das Gebiß drückt, eine wichtige Rolle. Um Zahnbelag von den Zähnen zu lösen, ist eine bestimmte Andruckkraft erforderlich. Da beim Putzen die Bürste jedoch auch beispielsweise das Zahnfleisch und den Zahnhals berührt, darf die Andruckkraft nicht zu groß sein. In DE-A-37 24 476 wird eine Ausführungsform einer Zahnbürste beschrieben, in der ein Schutz vor zu großer Andruckkraft vorhanden ist. Hierfür ist eine Blattfeder mit ihren beiden Enden in einander gegenüberliegenden Schlitzen der Teile angebracht. Ein Nachteil dieser Konstruktion liegt darin, daß nach Überschreiten einer Schwelle für die Andruckkraft, bei der die Feder schnappt, die Rückstellkraft der Feder und damit auch die Andruckkraft undefiniert ist.

Der Erfindung liegt die Aufgabe zugrunde, eine Zahnbürste mit definierter, reproduzierbarer und ausreichend großer Rückstellkraft nach dem Schnappen der Feder zu verschaffen.

Die erfindungsgemäße Zahnbürste ist hierzu durch die im Kennzeichen von Anspruch 1 angegebenen Merkmale gekennzeichnet.

Beim Erreichen eines bestimmten Schwellenwertes für die Andruckkraft löst sich das Ende der Feder plötzlich von dem Wandteil, das danach ausschließlich einer Biegespannung der Feder unterliegt.

Ein Vorteil der erfindungsgemäßen Zahnbürste ist, daß der Benutzer mit einer derartigen Zahnbürste nach dein Überschreiten einer bestimmten Schwelle für die Andruckkraft (z.B. 2 bis 3 N) ruhig mit Putzen fortfahren kann, weil nach dem Schnappen der Feder der Teil mit dein Bürstenkopf ausschließlich einer Biegebelastung unterliegt, die eine ausreichend große und definierte Andruckkraft liefert, die jedoch kleiner als der Schwellenwert ist, so daß die auf das Gebiß wirkende Andruckkraft nicht zu groß wird. Nach Verringerung oder Aufhebung der auf das Gebiß ausgeübten Kraft kehrt der Teil mit dem Bürstenkopf wieder zurück in seine ursprüngliche Lage. Natürlich sind die Teile hinsichtlich ihrer Schwenkbarkeit durch Vorhandensein eines Anschlags begrenzt. Dieser Anschlag liegt so, daß Putzen in dieser Stellung praktisch kaum vorkommt, aber durchaus möglich ist.

Eine bevorzugte Ausführungsform der Zahnbürste ist dadurch gekennzeichnet, daß das Wandteil des betreffenden Teils mit zwei miteinander einen Winkel bildenden Flächen versehen ist, wobei das Ende der Feder vor dem Schnappen einen Kontakt mit einer ersten Fläche und nach dem Schnappen einen Kontakt mit der anderen, zweiten Fläche einen Kontakt herstellt. Hiermit wird eine einfache Konstruktion für das Schnappen der Feder erhalten.

Vorzugsweise ist die Zahnbürste dadurch gekennzeichnet, daß die Feder nach dem Schnappen eine lineare Charakteristik hat.

Ein Ausführungsbeispiel der Erfindung ist in der Zeichnung dargestellt und wird im folgenden näher beschrieben. Es zeigen:
Figur 1 eine Zahnbürste in einer Lage vor dem Schnappen,
Figur 2 die Zahnbürste aus Figur 1 in einer Lage im Augenblick des Schnappens,
Figur 3 die Zahnbürste in einer Lage nach dem Schnappen,
Figur 4 ein Detail der Zahnbürste entsprechend dem Kreis A,
Figur 5 eine grafische Darstellung des Kraftverlaufs am Bürstenkopf als Funktion der Winkeldrehung des Bürstenkopfes und
Figuren 6 und 7 eine Zahnbürste nach einer zweiten Ausführungsform.

Die erfindungsgemäße Zahnbürste hat zwei mit einem Scharnier 1 miteinander verbundene Teile 2 und 3. Das erste Teil 2 dient als Griff. Das zweite Teil 3 hat eine Antriebswelle 4. Ein mit einem Bürstenkopf 5 versehener Bürstenstiel 6 ist mit der Antriebswelle 4 lösbar zu kuppeln. Zwischen den Teilen 2 und 3 befindet sich eine Feder 7. Eines der Enden 8 der Feder ist fest mit dem Teil 2 verbunden. Das andere Ende 9 der Feder 7 ist etwas umgebogen und liegt mit diesem umgebogenen Ende 9 gegen eine erste Andruckfläche 10 eines Wandteils 11 des Teils 3 an. Dieses Wandteil 11 weist direkt an die Fläche 10 angrenzend eine zweite Andruckfläche 12 auf.

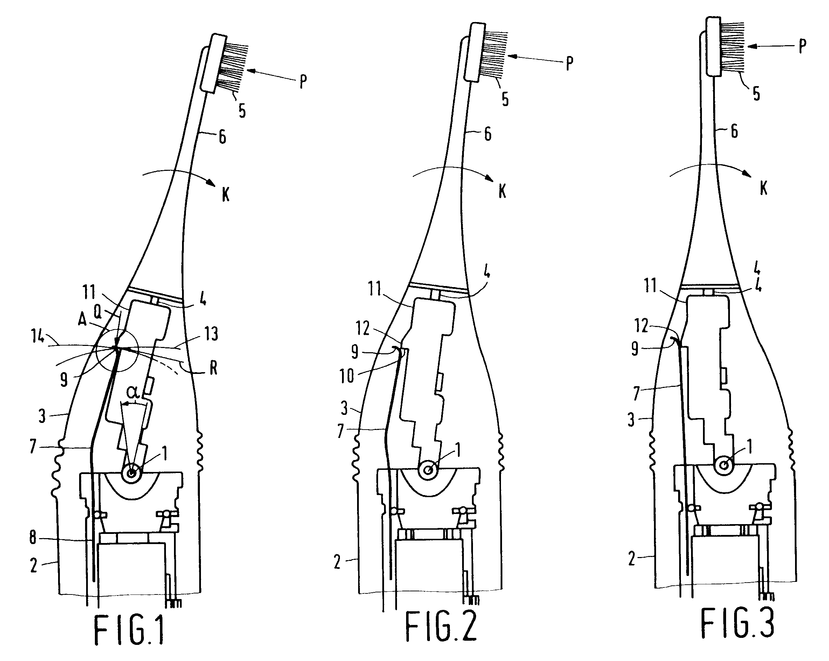

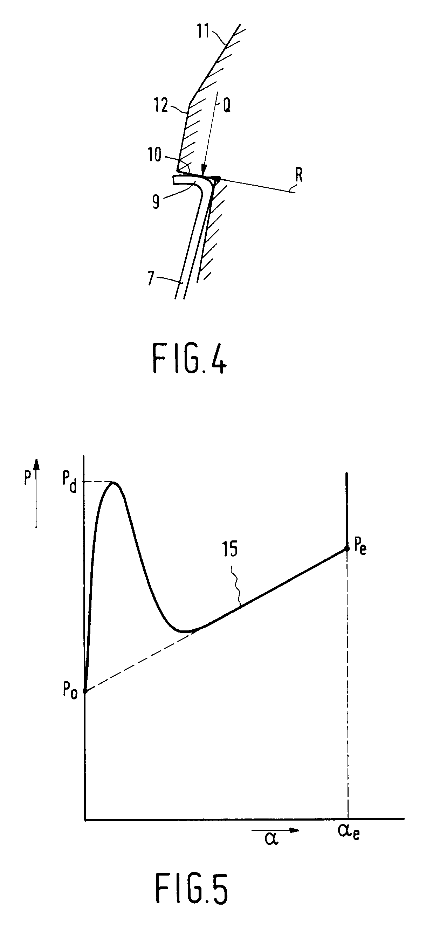

In Figur 1 wird die Zahnbürste in ihrer Ausgangslage gezeigt, d.h. in einer Stellung, in der nicht geputzt und auf den Bürstenkopf 5 keine Kraft ausgeübt wird. Die Feder 7 hat eine gewisse Vorspannung, die das Teil 3 mit dem Bürstenkopf in eine Richtung K im Uhrzeigersinn drückt. Das umgebogene Ende 9 der Feder liegt gegen die erste Andruckfläche 10 des Wandteils 11 an (siehe auch Figur 4). Während des Putzens wird auf den Bürstenkopf 5 eine Kraft P ausgeübt, die der Vorspannkraft der Feder entgegengesetzt ist. Wird die Kraft P größer als die Vorspannkraft, dann dreht sich hierdurch das Teil 3 bezüglich des Teils 2 in einer der Richtung K entgegengesetzten Richtung, d.h. entgegen dem Uhrzeigersinn. Durch die Andruckfläche 10 wird in Längsrichtung der Feder eine Druckkraft Q ausgeübt, die umso größer wird, je größer die Kraft P wird, und die versucht, das Ende 9 der Feder von seiner Andruckfläche 10 weg schnappen zu lassen. Bis zum Schnappen folgen das umgebogene Ende 9 der Feder 7 und die erste Andruckfläche 10 derselben Bahn 13.

In Figur 2 wird die Zahnbürste in einer Lage gezeigt, in der die Kraft P so groß geworden ist, daß die Feder ihre Schnapplage erreicht hat. Die quer zur Kraft Q gerichtete Kraft R, infolge des biegenden Moments am Ende der Feder, ist dann so groß geworden, daß das umgebogene Ende 9 der Feder von seiner Andruckfläche weggedrückt wird. Das Ende 9 springt quasi von der Andruckfläche weg. Nach dem Schnappen unterscheidet sich die Bahn 14 des Endes 9 der Feder 7 von der Bahn 13 des Wandteils 10.

Wie in Fig. 3 gezeigt wird, kommt dann der kurz unter dem umgebogenen Ende der Feder liegende Teil unmittelbar gegen eine zweite Andruckfläche 12 des Teils 3 zu liegen. Die Druckkraft in Längsrichtung der Feder ist dann nicht vorhanden. Das Teil 3 mit dem Bürstenkopf 5 unterliegt jetzt ausschließlich einer Biegebelastung, die den Teil 3 in seine ursprüngliche Lage zurückdrücken will. In diesem Fall kann man solange ruhig mit Putzen fortfahren, bis man die Bürste an eine andere zu putzende Stelle des Gebisses bringt. Die Kraft, mit der der Bürstenkopf auf das Gebiß drückt, wird dann kleiner oder aufgehoben, und der Teil mit dem Bürstenkopf kehrt unter dem Einfluß der Biegekraft der Feder in seine ursprüngliche Lage zurück.

In Figur 5 ist die Kraft P auf den Bürstenkopf als Funktion der Winkeldrehung α des Teils 3 gegenüber dein Teil 2 wiedergegeben. Bis zum Erreichen eines bestimmten Schwellenwertes P_{d} für die Andruckkraft P, der bei 2 bis 3 N liegt, ist die Winkeldrehung α nur Klein. Nach dein Schnappen der Feder bei einer Winkeldrehung α_{d} steht der Bürstenkopf ausschließlich unter der Kraft einer Biegespannung, wie mit der geraden Linie 15 gezeigt wird. Bei einer Winkeldrehung αₑ kann sich der Bürstenkopf wegen eines Anschlags (nicht abgebildet) zwischen den Teilen 2 und 3 nicht weiter drehen. Die zu dieser Winkeldrehung gehörende Andruckkraft Pₑ ist kleiner als der Schwellenwert P_{d}. Wird die Andruckkraft auf den Bürstenkopf aufgehoben, dann kehrt dieser wieder in seine Ausgangslage α₀ zurück. Die auf den Bürstenkopf wirkende Anfangskraft P₀ wird von der Vorspannung der Feder bewirkt.

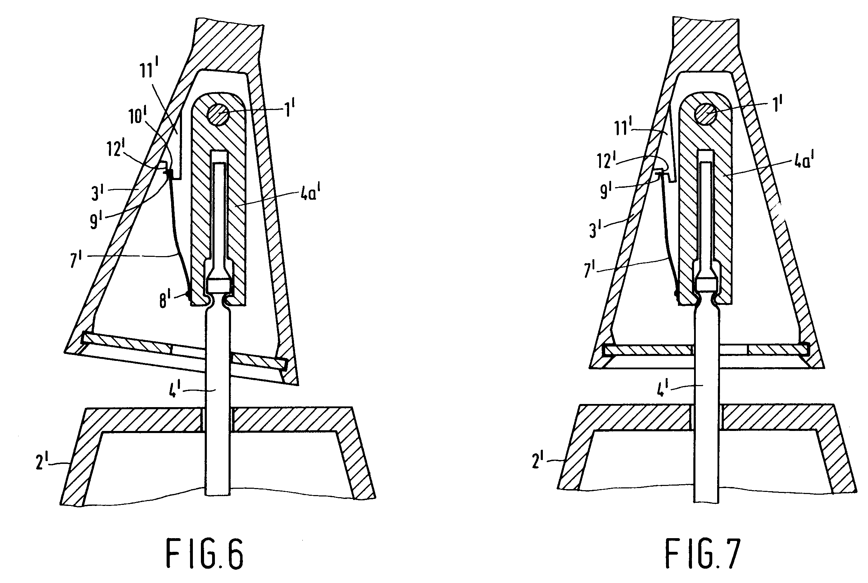

In den Figuren 6 und 7 wird eine andere Ausführungsform der erfindungsgemäßen Zahnbürste gezeigt. Hierbei ist eine Antriebswelle 4' schwenkbar mit dem zweiten Teil 3' verbunden. Hierzu ist das zweite Teil 3' mit einem Kupplungsstück 4a' versehen, das um eine Scharnierachse 1' schwenkbar ist, wobei das Kupplungsstück mit der Antriebswelle 4' gekuppelt werden kann. Ein nicht abgebildeter Bürstenkopf und das zweite Teil 3' können aus einem Stück hergestellt sein oder der Bürstenkopf kann mit dem zweiten Teil 3' lösbar verbunden werden. Eine Feder 7' ist mit einem Ende 8' fest mit dem Kupplungsstück 4a' verbunden. Das andere Ende 9' ist umgebogen und liegt gegen eine erste Andruckfläche 10' eines Wandteils 11' des zweiten Teils 3' an. Da die Antriebswelle 4' ein Teil des ersten Teils 2' ist und das Kupplungsstück 4a' fest mit der Antriebswelle verbunden ist, kann daher gesagt werden, daß auch bei diesem Beispiel die Feder 7' zwischen den Teilen 2' und 3' vorhanden ist. Ebenso wie bei dem Beispiel der Figuren 1 bis 3 wird beim Überschreiten einer bestimmten Schwelle für die Andruckkraft die Feder schnappen, d.h. das Ende 9' der Feder schnappt von der ersten Andruckfläche 10' weg und kommt gegen die zweite Andruckfläche 12' zu liegen, woraufhin das zweite Teil 3' ausschließlich einer Biegespannung unterliegt. Die Art des Schnappens und Zurückfederns der Feder 7 beruht jetzt auf demselben Prinzip, nämlich daß vor dem Schnappen der Feder die Bahn des Wandteils 10' und die Bahn des Endes 9' der Feder gleich und nach dein Schnappen verschieden sind.

Die in der Zeichnung dargestellte Zahnbürste ist eine elektrische Zahnbürste, bei der die Antriebswelle durch einen Motor bewegt wird. Die Zahnbürste kann jedoch auch eine gewöhnliche, nicht elektrische Zahnbürste sein.

## Patentansprüche

1. Zahnbürste mit zwei zueinander schwenkbaren Teilen (2,3), von denen ein erstes Teil (2) als Griff dient und ein zweites Teil (3) mit einem Bürstenkopf (5) versehen ist, wobei zwischen den Teilen eine Feder (7) vorhanden ist, deren eines Ende (8) fest mit einem der Teile (2) verbunden ist, wobei beim Gebrauch der Zahnbürste das zweite Teil (3) in bezug auf das erste Teil (2) gegen eine von der Feder (7) ausgeübte Andruckkraft schwenkbar ist und die Feder beim Überschreiten einer bestimmten Schwelle (P_{d}) für die Andruckkraft schnappt und bei schwächer gewordener Andruckkraft in ihre ursprüngliche Lage zurückkehrt, dadurch gekennzeichnet, daß das andere Teil (3) mit einem Wandteil (11) versehen ist, wobei, im Falle nach dem Schnappen der Feder (7), das Wandteil (11) einer Bahn (13) folgt, die sich von der Bahn (14) des vor dem Schnappen gegen das Wandteil (11) anliegenden Endes (9) der Feder unterscheidet, und wobei die Feder beim Verschwenken des anderen Teils (3) einer in Längsrichtung der Feder gerichteten, durch das Wandteil (11) ausgeübten Druckkraft (Q), und nach dem Schnappen bei Abwesenheit der durch das Wandteil (11) ausgeübten Druckkraft (Q) ausschließlich einer Biegebelastung unterliegt.

2. Zahnbürste nach Anspruch 1, dadurch gekennzeichnet, daß das Wandteil (11) des betreffenden Teils (2,3) mit zwei miteinander einen Winkel bildenden Flächen (10, 12) versehen ist, wobei das Ende (9) der Feder vor dem Schnappen einen Kontakt mit einer ersten Fläche (10) und nach dem Schnappen einen Kontakt mit der anderen, zweiten Fläche (12) herstellt.

3. Zahnbürste nach Anspruch 1 oder 2, dadurch gekennzeichnet, daß die Feder nach dem Schnappen eine lineare Charakteristik hat.

## Claims

1. A toothbrush comprising two parts (2, 3) which are pivotable relative to one another, of which a first part (2) serves as a handle and of which a second part (3) carries a brush-head (5), a spring (7) being arranged between the parts and having one end (8) fixedly connected to one (2) of the parts, the second part (3) being pivotable relative to the first part (2) against a pressure exerted by the spring (7) during use of the toothbrush, which spring snaps when a given pressure threshold (P_{d}) is exceeded and resumes its original position when the pressure has decreased, characterized in that the other part (3) has a wall portion (11), said wall portion (11), in a situation after snapping of the spring (7), following a path (13) which differs from the path (14) of the spring end portion (9) which engages against wall portion (11) before snapping, and the spring being subjected to a pressure (Q) directed in the longitudinal direction of the spring and exerted by the wall portion (11) when the other part (3) is pivoted and being subjected exclusively to a bending load (Q) after snapping in the absence of the pressure (Q) exerted by the wall portion (11).

2. A toothbrush as claimed in Claim 1, characterized in that the wall portion (11) of the relevant part (2, 3) has two surfaces (10, 12) forming an angle with one another, the end portion (9) of the spring being in contact with a first surface (10) before snapping and being in contact with the other second surface (12) after snapping.

3. A toothbrush as claimed in Claim 1 or 2, characterized in that the spring has a linear characteristic after snapping.

## Revendications

1. Brosse à dents munie de deux parties (2, 3), qui pivotent l'une par rapport à l'autre et dont une première partie (2) fait office de poignée, alors que la deuxième partie (3) est munie d'une tête à brosse (5), parties entre lesquelles est présent un ressort (7) dont une extrémité (8) est reliée d'une façon fixe à l'une des parties (2), le tout de façon que, lors de l'utilisation de la brosse à dents, la deuxième partie (3) puisse tourner par rapport à la première partie (2) à l'encontre d'une force de pression exercée par le ressort (7) et lequel ressort subit un déclenchement au moment où un seuil déterminé (P^{d}) de la force de pression est dépassé et rentre dans sa position initiale au moment où la force de pression diminue, caractérisée en ce que l'autre partie (3) est munie d'une partie de paroi (11) de telle façon que, dans une situation se produisant après le déclenchement du ressort (7), la partie de paroi (11) suive un trajet (13) qui diffère du trajet (14) de l'extrémité (9) du ressort qui s'applique avant le déclenchement contre la partie de paroi (11) et de façon que, lors de la rotation de l'autre partie (3), le ressort ne soit soumise qu'à une force de pression (Q) dirigée dans la direction longitudinale du ressort et exercée par la partie de paroi (11) et après le déclenchement, en l'absence de la force de pression (Q) exercée par la partie de paroi (11), ledit ressort ne soit soumise qu'à une charge de flexion.

2. Brosse à dents selon la revendication 1, caractérisée en ce que la partie de paroi (11) de la partie en question (3) est munie de deux faces (10, 12), qui forment un angle entre elles de façon qu'avant le déclenchement l'extrémité (9) du ressort entre en contact avec une première face (10) et après le déclenchement avec l'autre, deuxième face (12).

3. Brosse à dents selon la revendication 1 ou 2, caractérisée en ce qu'après le déclenchement le ressort présente une caractéristique linéaire.
